# EUROPÄISCHE PATENTSCHRIFT

(11) **EP 0 770 535 B1**
(45) Veröffentlichungstag und Bekanntmachung des Hinweises auf die Patenterteilung: **21.04.1999**
(21) Anmeldenummer: 96116000.9
(22) Anmeldetag: 05.10.1996
(51) Int. Cl.: B62B 3/14

(54) **Stapelbarer Transportwagen**
Nestable transport cart
Chariot de transport emboîtable

(30) Priorität: 24.10.1995 DE 29516945 U
(43) Veröffentlichungstag der Anmeldung: 02.05.1997
(73) Patentinhaber: Brüder Siegel GmbH + Co. KG Draht- und Metallwarenfabrik, 89340 Leipheim (DE)
(72) Erfinder: Kugler, Rudolf, OT Schönenberg (DE)
(74) Vertreter: Grättinger & Partner (GbR)

(56) Entgegenhaltungen:
- EP-A- 0 352 647
- FR-A- 1 574 237

## Beschreibung

Die vorliegende Erfindung betrifft einen stapelbaren Transportwagen mit einem Fahrgestell, das einen Fahrgestellrahmen, vier Lenkrollen und wenigstens eine zwischen diesen angeordneten Bockrolle aufweist, mit einer Ablagefläche sowie einer rückseitig angeordneten Schiebeeinrichtung, wobei die mindestens eine Bockrolle an einem gelenkig am Fahrgestellrahmen aufgehängten Traggestell aus der durch die Lenkrollen aufgespannten Ebene heraus anhebbar gelagert ist.

Ein derartiger Transportwagen ist aus der europäischen Patentschrift 0352647 bekannt. Dabei stützt sich der Fahrgestellrahmen unmittelbar auf den vier Lenkrollen ab. Vorne an dem Fahrgestellrahmen ist das Traggestell für die Bockrolle um eine sich horizontal, quer zur Fahrtrichtung erstreckende Achse schwenkbar angelenkt. Darüber hinaus ist stirnseitig am Fahrgestellrahmen eine Anhebevorrichtung vorgesehen, welche beim Stapeln zweier Transportwagen das Bockrollen-Traggestell des jeweils vorausbefindlichen Transportwagen anhebt und auf diese Weise die Bockrolle des jeweils vorausbefindlichen Transportwagens außer Kontakt mit dem Boden bringt. Bei einem Stapel mehrerer bekannter Transportwagen hat somit nur die Bockrolle des hintersten Transportwagens Bodenkontakt.

Der bekannte Transportwagen weist mehrere Nachteile auf, von denen insbesondere zwei hervorzuheben sind: Zum einen sind, um einen Stapel von Transportwagen zu bewegen, stets zwei Personen erforderlich, nämlich eine Person, die den Stapel von hinten schiebt, und eine weitere Person, die das vordere Ende des Stapels führt und ein Ausbrechen der Wagen zur Seite in Kurven sowie auf einem seitwärts geneigten Untergrund verhindert. Zum zweiten bedarf das Stapeln zweier Transportwagen einen beträchtlichen Kraftaufwandes; denn die Bockrolle muß, damit sie das Ausbrechen auch eines schwer beladenen Transportwagens zuverlässig verhindert, mittels einer hohen Kraft gegen die Fahrbahn vorgespannt sein, und eben diese hohe Vorspannkraft ist beim Stapeln zweier Transportwagen beim Anheben der Bockrolle des vorderen Transportwagens zu überwinden. Würde hingegen, um den beim Stapeln erforderlichen Kraftaufwand zu reduzieren, die Vorspannung der Bockrolle gegen die Fahrbahn vermindert, so wäre bei einem mit großer Last beladenen Transportwagen dessen Führung in Kurven und auf seitwärts geneigten Flächen nicht sicher gewährleistet.

Der vorliegenden Erfindung liegt die Aufgabe zugrunde, einen gattungsgemäßen Transportwagen in der Weise zu verbessern, daß ein Stapel mehrerer Transportwagen von einer einzigen Person geschoben werden kann, wobei zugleich das Stapeln zweier Transportwagen erleichtert werden soll.

Gemäß der vorliegenden Erfindung wird diese Aufgabe dadurch gelöst, daß die vorderen Lenkrollen an einem gelenkig mit dem Fahrgestellrahmen verbundenen Wippenrahmen angeordnet sind, dessen hinterer Abschnitt das Traggestell für die mindestens eine Bockrolle bildet und auf dem sich in Längsrichtung zwischen den vorderen Lenkrollen und der mindestens einen Bockrolle der Fahrgestellrahmen abstützt, und daß am Fahrgestellrahmen mindestens um das Maß der Stapeltiefe hinter dessen Stirnseite eine Spreizeinrichtung vorgesehen ist, die bei dem jeweils nächsten hinteren Transportwagen eines Stapels die vorderen Abschnitte des Wippenrahmens und des Fahrgestellrahmens bezüglich einander spreizt. Ein wesentliches Merkmal des erfindungsgemäßen Transportwagens ist somit, daß die vorderen Lenkrollen nicht unmittelbar am Fahrgestellrahmen angeordnet sind, sondern vielmehr an einem gelenkig mit dem Fahrgestellrahmen verbundenen Wippenrahmen. Indem sich der Fahrgestellrahmen auf dem Wippenrahmen in Längsrichtung zwischen den vorderen Lenkrollen und der mindestens einen Bockrolle abstützt, ist die Kraft, mit welcher die Bockrolle gegen die Fahrbahn gepreßt wird, von der Beladung des Transportwagens abhängig. Bei einem stark beladenen Transportwagen wird die mindestens eine Bockrolle somit stark an die Fahrbahn angepreßt, so daß ein Ausbrechen des Transportwagens in Kurven und/oder auf seitwärts geneigten Fahrbahnen sicher ausgeschlossen ist. Umgekehrt ist bei unbeladenem Transportwagen der Anpreßdruck der mindestens einen Bockrolle auf die Fahrbahn nur gering, so daß das Stapeln zweier Transportwagen mit geringem Kraftaufwand möglich ist. Anders als dies für den Stand der Technik zutrifft, wird allerdings bei der Erfindung beim Stapeln zweier Transportwagen nicht die Bockrolle des jeweils vorderen Transportwagens angehoben, sondern vielmehr diejenige des jeweils hinteren Transportwagens. Auf diese Weise ist sichergestellt, daß bei einem mehrere Transportwagen umfassenden Stapel die mindestens eine Bockrolle des vordersten Transportwagens auf der Fahrbahn aufliegt. Dies bedeutet, daß das vordere Ende eines Transportwagenstapels durch die Bockrolle(n) des vordersten Transportwagens geführt ist und infolge dieser Führung nicht ausbrechen kann. Durch die Erfindung ist somit möglich, daß eine einzige Person einen Transportwagenstapel schieben und zugleich von hinten her dirigieren kann. Dies gestattet eine beträchtliche Einsparung von Personal, das bei mit herkömmlichen Transportwagen ausgestatteten Großmärkten zum Befördern der Transportwagen zu Sammelstellen bereitgestellt werden muß.

Darüber hinaus hebt sich der erfindungsgemäße Transportwagen vom Stand der Technik auch insoweit vorteilhaft ab, als er ohne eine stirnseitig angeordnete Anhebevorrichtung für das Traggestell auskommt. Denn eben jene beim bekannten gattungsgemäßen Transportwagen stirnseitig vorgesehene Anhebevorrichtung ist in besonderem Maße der Gefahr einer Beschädigung ausgesetzt, bspw. durch Anfahren des Transportwagens gegen Bordsteine oder andere auf Parkplätzen häufig vorkommende Hindernisse.

Weitere Vorteile sowie vorteilhafte Ausgestaltungen des erfindungsgemäßen Transportwagens ergeben sich aus den Unteransprüchen wie auch aus der nachfolgenden Beschreibung eines bevorzugten Ausführungsbeispiels, das sich auf die anliegende Zeichnung bezieht. In dieser zeigt
- Fig. 1: eine bevorzugte Ausführungsform des erfindungsgemäßen Transportwagens in Seitenansicht,
- Fig. 2: eine Draufsicht auf den Transportwagen gemäß Fig. 1 und
- Fig. 3: einen Stapel aus zwei ineinandergeschobenen Transportwagen gemäß Fig. 1.

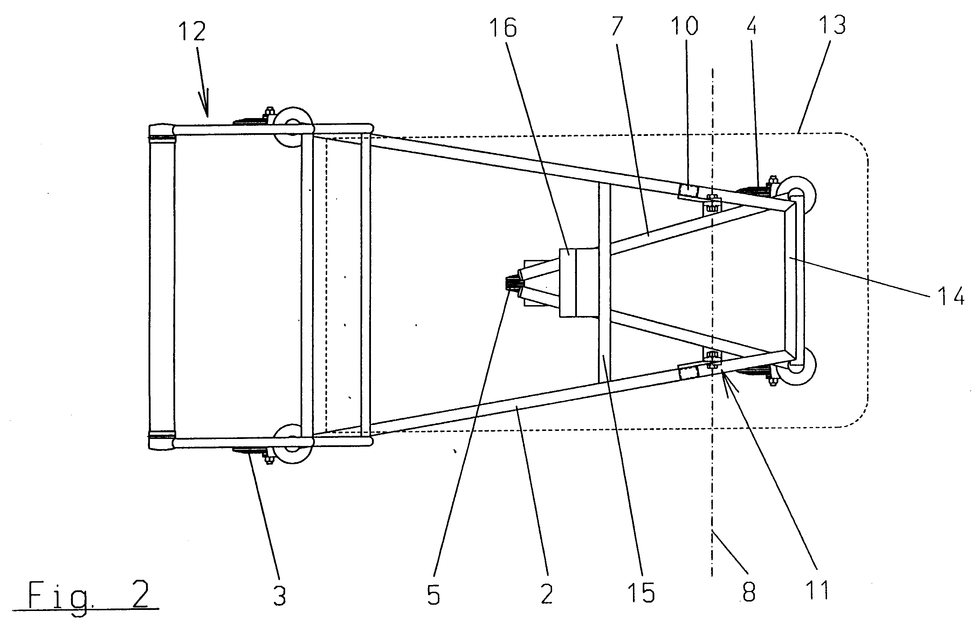

Das Fahrgestell 1 des Transportwagens umfaßt einen Fahrgestellrahmen 2, zwei hintere Lenkrollen 3, zwei vordere Lenkrollen 4 sowie eine zwischen den Lenkrollen angeordnete Bockrolle 5. Dabei sind die hinteren Lenkrollen 3 mittels entsprechender Stützen 6 unmittelbar am Fahrgestellrahmen 2 angeordnet. Die vorderen Lenkrollen 4 sind hingegen vorne an einem Wippenrahmen 7 angeordnet, der um eine horizontale, sich quer zur Fahrtrichtung erstreckende Achse 8 schwenkbar mit dem Fahrgestellrahmen 2 verbunden ist. An eben diesem Wippenrahmen 7, nämlich im Bereich seines hinteren Endes 9 ist auch die Bockrolle 5 angeordnet. Der Wippenrahmen 7 umfaßt, wie Fig. 2 veranschaulicht, zwei V-förmig zueinander angeordnete Holme. Von jedem Seitenholm des Fahrgestellrahmens 2 springt nach unten eine Stütze 10 vor, an der die zugeordnete Gelenkverbindung 11 zum entsprechenden Holm des Wippenrahmens 7 angeordnet ist.

Eine rückseitig vorgesehene Schiebeeinrichtung 12 ist in bekannter Weise mit dem Fahrgestellrahmen 2 verbunden. Ebenfalls in bekannter Weise ist ein Ablagerost 13 gelenkig mit dem Fahrgestellrahmen 2 verbunden, und zwar in der Weise, daß die horizontale, sich quer zur Fahrtrichtung erstreckende Schwenkachse des Ablagerosts im Bereich dessen rückwärtigen Endes angeordnet ist.

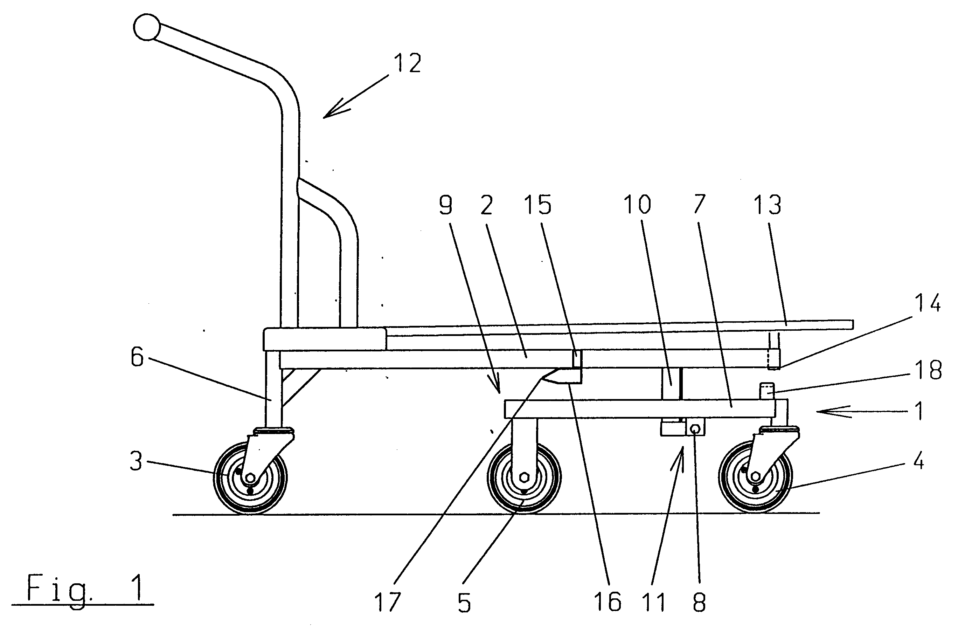

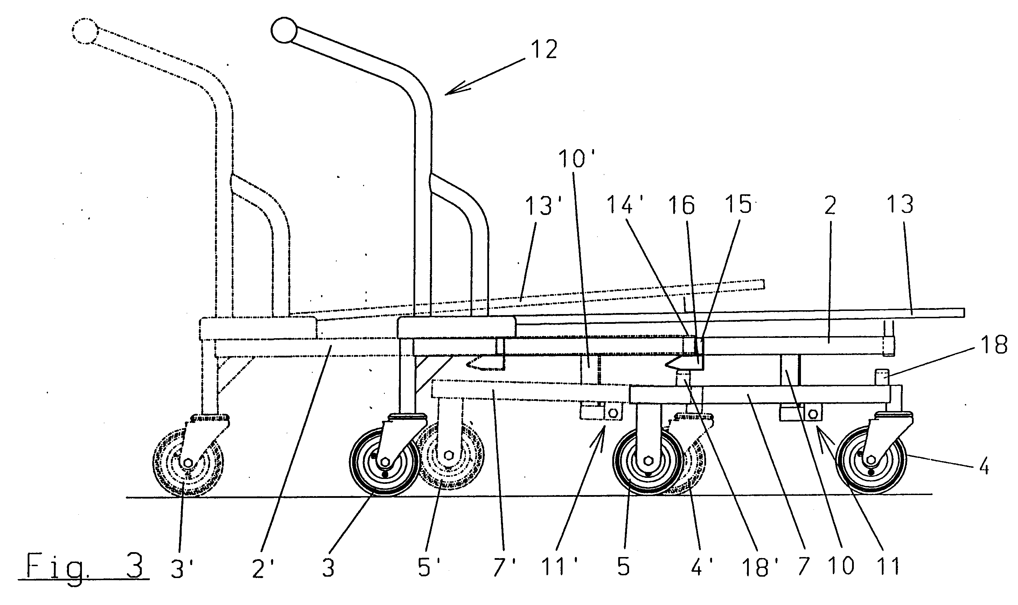

Die beiden Längsholme des Fahrgestellrahmens 2 sind stirnseitig durch einen Querholm 14 miteinander verbunden. Etwa um die Stapeltiefe der Transportwagen (vgl. Fig. 3) hinter dem Querholm erstreckt sich zwischen den beiden Längsholmen des Fahrgestellrahmens 2 eine Querstrebe 15. An der Querstrebe 15 ist in ihrem mittleren Bereich ein Keilkörper 16 vorgesehen, dessen Keilspitze 17 sich in rückwärtiger Richtung erstreckt. Der Keilkörper 16 ist dabei, wie Fig. 1 veranschaulicht, aus Blech gebogen. Alternativ hierzu kommt beispielsweise die Anordnung von zwei Keilkörpern innen an den Längsholmen des Fahrgestellrahmens in Betracht.

Vorne am Wippenfahrwerk 7 ist ein Nocken 18 vorgesehen, der beim Stapeln zweier Transportwagen mit dem Keilkörper 16 zusammenwirkt. Seine Funktion ergibt sich im einzelnen aus der nachstehenden Erläuterung der Fig. 3.

Beim Stapeln zweier Transportwagen wird der sich in Fahrtrichtung verjüngende Fahrgestellrahmen 2' des hinteren Transportwagens in den Fahrgestellrahmen 2 des vorderen Transportwagens eingeschoben, und zwar so weit, bis der Querholm 14' des hinteren Transportwagens an die Querstrebe 15 des vorderen Transportwagens anstößt. Die Querstrebe 15 wirkt auf diese Weise als die Stapeltiefe definierender Anschlag. Auf dem letzten Abschnitt der Stapelbewegung, d.h. der Bewegung des hinteren Transportwagens relativ zum vorderen, dringt der Keilkörper 16 des vorderen Transportwagens in den Zwischenraum zwischen den Nocken 18' und dem Querholm 14' des hinteren Transportwagens ein. Dabei spreizt der Keilkörper die vorderen Abschnitte des Wippenrahmens 7' und des Fahrgestellrahmens 2' des hinteren Transportwagens bezüglich einander. Hierzu besitzt er eine vertikale Erstreckung, die geringfügig größer ist als der Abstand zwischen dem Querholm 14 und dem Nocken 18 bei nicht gestapelten Transportwagen.

Indem die vorderen Abschnitte des Wippenrahmens und des Fahrgestellrahmens des jeweils hinteren Transportwagens eines Stapels durch den Keilkörper 16 bezüglich einander gespreizt werden, hebt sich zum einen der Fahrgestellrahmen 2' des hinteren Transportwagens vorne geringfügig an, und zum anderen wird die Bockrolle 5' des hinteren Transportwagens vom Boden abgehoben. Bei mehreren gestapelten Transportwagen bleibt somit lediglich die Bockrolle 5 des vordersten Transportwagens in Bodenkontakt. Der Keilkörper 16 des jeweils vorderen Transportwagens überbrückt vollständig den Zwischenraum zwischen dem Querholm 14' und dem Nocken 18' des jeweils hinteren Transportwagens. Auf diese Weise stützt sich in einem Transportwagenstapel der Fahrgestellrahmen 2' des hinteren Transportwagens unter Zwischenschaltung des Keilkörpers 16 des vorderen Transportwagens unmittelbar auf den eigenen vorderen Lenkrollen 4' ab.

Der horizontale Abstand der Gelenkverbindung 11 zwischen dem Wippenrahmen 7 und dem Fahrgestellrahmen 2 von den vorderen Lenkrollen 4 beträgt bei dem in den Fig. 1 bis 3 dargestellten Ausführungsbeispiel des erfindungsgemäßen Transportwagens etwa ein Viertel des Abstands zwischen den vorderen Lenkrollen 4 und der Bockrolle 5. Bei diesem Verhältnis ist einerseits die bei beladenem Transportwagen über die Stützen 10 und den Wippenrahmen 7 auf die Bockrolle aufgebrachte Kraft ausreichend groß, um ein Ausbrechen des Transportwagens in Kurven und auf seitwärts geneigten Flächen sicher zu verhindern. Auf der anderen Seite genügt bei einer derartigen Dimensionierung bereits ein relativ geringes Spreizen der vorderen Abschnitte des Fahrgestellrahmens und des Wippenrahmens beim Stapeln, um die Bockrolle des jeweils hinteren Transportwagens um ein ausreichendes Maß anzuheben.

## Patentansprüche

1. Stapelbarer Transportwagen mit einem Fahrgestell (1), das einen Fahrgestellrahmen (2), vier Lenkrollen (3; 4) und wenigstens eine zwischen diesen angeordnete Bockrolle (5) aufweist, mit einer Ablagefläche sowie einer rückseitig angeordneten Schiebeeinrichtung (12), wobei die mindestens eine Bockrolle an einem gelenkig am Fahrgestellrahmen (2) aufgehängten Traggestell aus der durch die Lenkrollen (3, 4) aufgespannten Ebene heraus anhebbar gelagert ist,
dadurch gekennzeichnet,
daß die vorderen Lenkrollen (4) an einem gelenkig mit dem Fahrgestellrahmen (2) verbundenen Wippenrahmen (7) angeordnet sind, dessen hinterer Abschnitt das Traggestell für die mindestens eine Bockrolle (5) bildet und auf dem sich in Längsrichtung zwischen den vorderen Lenkrollen (4) und der mindestens einen Bockrolle (5) der Fahrgestellrahmen (2) abstützt, und daß am Fahrgestellrahmen (2) mindestens um das Maß der Stapeltiefe hinter dessen Stirnseite eine Spreizeinrichtung vorgesehen ist, die bei dem jeweils nächsten hinteren Transportwagen eines Stapels die vorderen Abschnitte des Wippenrahmens (7) und des Fahrgestellrahmens (2) bezüglich einander spreizt.

2. Stapelbarer Transportwagen nach Anspruch 1,
dadurch gekennzeichnet,
daß der horizontale Abstand der Gelenkverbindung (11) des Wippenrahmens (7) mit dem Fahrgestellrahmen (2) von den vorderen Lenkrollen (4) zwischen 20% und 50% des Abstandes zwischen den vorderen Lenkrollen (4) und der mindestens einen Bockrolle (5) beträgt.

3. Stapelbarer Transportwagen nach Anspruch 1,
dadurch gekennzeichnet,
daß die Spreizeinrichtung als Keilkörper (16) ausgebildet ist, dessen Keilspitze (17) in rückwärtige Richtung weist und der bei gestapelten Transportwagen den lichten Abstand zwischen den vorderen Enden des Fahrgestellrahmens (2') und des Wippenrahmens (7') des jeweils nächsten hinteren Transportwagens überbrückt.

4. Stapelbarer Transportwagen nach Anspruch 3,
dadurch gekennzeichnet,
daß der Keilkörper (16) an einer die Längsholme des Fahrgestellrahmens (2) verbindenden Querstrebe (15) angeordnet ist.

5. Stapelbarer Transportwagen nach Anspruch 1,
dadurch gekennzeichnet,
daß ein im Bereich seines rückwärtigen Endes gelenkig am Fahrgestellrahmen (2) angelenkter Ablagerost (13) vorgesehen ist.

6. Stapelbarer Transportwagen nach Anspruch 3,
dadurch gekennzeichnet,
daß zwei Keilkörper vorgesehen sind, welche innen an den Längsholmen des Fahrgestellrahmens (2) angeordnet sind.

## Claims

1. Stackable transport trolley with a running gear (1) having a running gear frame (2), four guide rollers (3; 4) and at least one trestle roller (5) arranged between these, with a deposit surface and also a sliding means (12) arranged on the rear side, whereby the at least one trestle roller is disposed on a support frame, which is suspended in an articulated manner on the running gear frame (2), to be raised out of the plane spanned by the guide rollers (3, 4), characterised in that the front guide rollers (4) are arranged on a rocker frame (7) articulated to the running gear frame (2), the rear section of said rocker frame forming the support frame for the at least one trestle roller (5) and the running gear frame (2) being supported on said rocker frame in the longitudinal direction between the front guide rollers (4) and the at least one trestle roller (5) of the running gear frame (2), and that behind its front side a spreading means, which spreads the front sections of the rocker frame (7) and the running gear frame (2) in relation to one another on the next respective rear transport trolley of a stack, is provided on the running gear frame (2) at least to the magnitude of the stack depth.

2. Stackable transport trolley according to Claim 1, characterised in that the horizontal distance of the articulation (11) of the rocker frame (7) to the running gear frame (2) from the front guide rollers (4) amounts to between 20% and 50% of the distance between the front guide rollers (4) and the at least one trestle roller (5).

3. Stackable transport trolley according to Claim 1, characterised in that the spreading means is constructed as a wedge member (16), the wedge tip (17) of which points in rearward direction and which bridges the clear distance between the front ends of the running gear frame (2') and the rocker frame (7') of the next respective rear transport trolley.

4. Stackable transport trolley according to Claim 3, characterised in that the wedge member (16) is arranged on a cross strut (15) connecting the longitudinal beams of the running gear frame (2).

5. Stackable transport trolley according to Claim 1, characterised in that a deposit grate (13) articulated to the running gear frame (2) is provided in the region of its rear end.

6. Stackable transport trolley according to Claim 3, characterised in that two wedge members are provided which are arranged on the longitudinal beams of the running gear frame (2) on the inside.

## Revendications

1. Chariot de transport emboîtable comprenant un système de roulement (1) qui comporte un châssis (2), quatre roulettes orientables (3, 4) et au moins une roulette stabilisatrice (5) disposée entre celles-ci, une surface de chargement ainsi qu'un dispositif de poussée (12) situé côté arrière, la roulette stabilisatrice, au nombre d'au moins une, étant montée sur un châssis-support lié de manière articulée au châssis de système de roulement (2), avec possibilité de relevage hors du plan défini par les roulettes orientables (3, 4), caractérisé par le fait que les roulettes orientables avant (4) sont disposées sur un châssis oscillant (7) lié de manière articulée au châssis de système de roulement (2), dont la partie arrière constitue le châssis-support pour la roulette stabilisatrice (5) au nombre d'au moins une et sur lequelle châssis de système de roulement (2) prend appui dans la direction longitudinale, entre les roulettes orientables avant (4) et la roulette stabilisatrice (5) au nombre d'au moins une, et par le fait qu'il est prévu sur le châssis de système de roulement (2), décalé vers l'arrière d'au moins la valeur de la profondeur d'emboîtement par rapport à la face frontale dudit châssis de système de roulement, un dispositif écarteur qui, sur le chariot situé immédiatement derrière dans une file, éloigne l'une de l'autre les parties antérieures du châssis oscillant (7) et du châssis de système de roulement (2).

2. Chariot de transport emboîtable selon la revendication 1, caractérisé par le fait que la distance horizontale entre la liaison articulée (11) entre le châssis oscillant (7) et le châssis de système de roulement (2) et les roulettes orientables avant (4) est comprise entre 20% et 50% de la distance entre les roulettes orientables avant (4) et la roulette stabilisatrice (5) au nombre d'au moins une.

3. Chariot de transport emboîtable selon la revendication 1, caractérisé par le fait que le dispositif écarteur est conformé en coin (16), dont la pointe (17) est tournée vers l'arrière et qui, lorsque les chariots sont emboîtés, comble l'espace libre entre les extrémités avant du châssis de système de roulement (2') et du châssis oscillant (7') du chariot de transport suivant.

4. Chariot de transport emboîtable selon la revendication 3, caractérisé par le fait que le coin (16) est disposé sur une traverse (15) qui relie entre eux les longerons du châssis de système de roulement (2).

5. Chariot de transport emboîtable selon la revendication 1, caractérisé par le fait qu'une grille de chargement (13) liée de manière articulée au châssis de système de roulement (2) est prévue dans la région de l'extrémité arrière de celui-ci.

6. Chariot de transport emboîtable selon la revendication 3, caractérisé par le fait qu'il est prévu deux coins qui sont disposés côté intérieur sur les longerons du châssis de système de roulement (2).
